# EUROPÄISCHE PATENTSCHRIFT

(11) **EP 3 289 204 B1**
(45) Veröffentlichungstag und Bekanntmachung des Hinweises auf die Patenterteilung: **02.04.2025**
(21) Anmeldenummer: 16722086.2
(22) Anmeldetag: 26.04.2016
(51) Int. Cl.: B60K 13/00

(54) **VERFAHREN UND VORRICHTUNG ZUR OPTIMIERUNG DER FAHRBARKEIT EINES KRAFTFAHRZEUGS**
METHOD AND APPARATUS FOR OPTIMIZING THE DRIVABILITY OF A MOTOR VEHICLE
PROCÉDÉ ET DISPOSITIF D'OPTIMISATION DE LA CAPACITÉ DE DÉPLACEMENT D'UN VÉHICULE À MOTEUR

(30) Priorität: 29.04.2015 DE 202015003159 U; 03.11.2015 DE 102015014171
(43) Veröffentlichungstag der Anmeldung: 07.03.2018
(73) Patentinhaber: Technische Universität Darmstadt, 64289 Darmstadt (DE)
(72) Erfinder: BEIDL, Christian, 64285 Darmstadt (DE); KLUIN, Matthias, 55126 Mainz (DE); LENZEN, Bernd, 64380 Roßdorf (DE); MARTIN, Sebastian, 64283 Darmstadt (DE)
(74) Vertreter: Wallinger, Michael
(86) Internationale Anmeldenummer: PCT/EP2016/059303
(87) Internationale Veröffentlichungsnummer: WO 2016/174040

(56) Entgegenhaltungen:
- EP-A1- 2 607 645
- DE-A1- 10 158 913
- DE-A1- 102006 023 469
- DE-A1- 102012 104 155
- DE-T2- 602005 004 861
- THOMAS RIEMER: "Vorausschauende Betriebsstrategie für ein Erdgashybridfahrzeug", 1 January 2012 (2012-01-01), Stuttgart, XP055289426, Retrieved from the Internet <URL:http://www.fkfs.de/uploads/publikationen/Diss_Thomas_Riemer_geschuetzt.pdf> [retrieved on 20160719]
- MAXIMILIAN BIER ET AL: "Strukturierte Betriebsstrategie fuer Hybridfahrzeuge", vol. 17, no. 5, 25 May 2012 (2012-05-25), pages 94 - 99, XP008180766, ISSN: 2195-1454, Retrieved from the Internet <URL:http://rd.springer.com/article/10.1365%2Fs35778-012-0722-7> [retrieved on 20160719]

## Beschreibung

Die vorliegende Erfindung betrifft ein Verfahren und eine Vorrichtung zur Optimierung der Fahrbarkeit von Kraftfahrzeugen, welche wenigstens zeitweise von einem Verbrennungsmotor angetrieben werden.

Der Begriff "Fahrbarkeit", im Englischen "drivability", bezeichnet eine technisch nicht ohne weiteres zu erfassende Eigenschaft eines Kraftfahrzeugs, die für dessen Akzeptanz beim Fahrer bzw. allgemein bei den Passagieren von großer Bedeutung ist. Die Fahrbarkeit spiegelt das subjektive Empfinden des Fahrers wider und wird vor allem, aber nicht nur, durch das Verhalten des Fahrzeugs in Übergangszuständen, d.h. z. B. während einer Beschleunigungs- oder Bremsphase, geprägt. Wenn der Motor beispielsweise sehr spontan auf eine durch das Niederdrücken des Gaspedals ausgelöste Beschleunigungsanforderung reagiert, spricht man von einem agilen oder temperamentvollen Motor. "Agil" und "temperamentvoll" sind dabei Begriffe, mit dem sonst eher Lebewesen charakterisiert werden. Umgekehrt gilt ein Motor, der auf Gaspedalbefehle träge reagiert, als lahm oder müde oder temperamentlos; ebenfalls Begriffe, mit denen man sonst üblicherweise Lebewesen charakterisiert. Da ein solches subjektives Empfinden sowohl für die Kaufentscheidung als auch für die Zufriedenheit mit dem Produkt von grundlegender Bedeutung ist, ist die Sicherstellung einer guten Fahrbarkeit ein wesentliches Ziel bei der Entwicklung von Automobilen.

Dieses Ziel steht aber in Konflikt mit zwei anderen wichtigen Zielen der Fahrzeugentwicklung, nämlich der Verbrauchsreduzierung und der Reduzierung von Abgasemissionen. Wenn das Fahrzeug auf Gaspedalbewegungen spontan reagieren soll, muss die Kalibrierung des Motorsteuergeräts und, soweit vorhanden, auch eine automatische Steuerung eines Getriebes so abgestimmt sein, dass das Drehmoment des Motors schnell erhöht werden kann. Dies setzt eine Auslegung der einzelnen Motorkomponenten, z. B. Ventilsteuerung, Einspritzanlage, Abgasturbolader etc. voraus, die für den Verbrauch nicht günstig sind. Der rasche Wechsel des Betriebszustands eines Motors ist ferner für die Abgasnachbehandlung ungünstig. Das Abgassystem ist zu Beginn des Beschleunigungsvorgangs noch auf die Bedingungen eingestellt, die vor dem Beschleunigungsvorgang vorlagen und kann deshalb seine Funktionen während des Übergangs nicht in gewünschter Weise erfüllen.

Die deutsche Patentanmeldung DE 101 64 792 A1 setzt sich mit einem Teilaspekt der Fahrbarkeit auseinander, nämlich mit dem Beschleunigungsverhalten einer Brennkraftmaschine, die mit einem Abgasturbolader ausgerüstet ist. Die Druckschrift beschreibt das Problem, dass die Beschleunigung bei einem solcher Art aufgeladenen Motor mit einer Verzögerung erfolgt, da es eine gewisse Zeit dauert, bis der Abgasturbolader den für die Beschleunigung erforderlichen Ladedruck liefert, was als sogenanntes "Turboloch" bezeichnet wird. Es wird vorgeschlagen, einen Sensor zu verwenden, der eine stattfindende Änderung der Leistungsanforderung an den Verbrennungsmotor erkennt und eine dort so genannte Voraktivierung einer Komponente des Aufladesystems bewirkt. Dabei kann es sich um einen elektrischen Booster handeln, der die Drehzahl des Turboladers vor dem Beschleunigungsvorgang erhöht oder auch um einen zusätzlichen elektrischen Verdichter.

DE 60 2005 004861 T2 beschreibt ein Hybridfahrzeug, wobei eine Leistung des Generators zwischen dem elektrischen Traktionsantrieb und einem elektrischen Turbolader verteilt wird. Das Dokument beschreibt keine Steuereinrichtung, die dafür vorgesehen ist, aus wenigstens einem fahrzeug- und/oder umgebungs- und/oder umweltbezogenen Zustandsparameter eine Fahrzeugverhaltensprognose zu berechnen und daraus einen Steuerwert oder einen Steuerdatensatz zur Ansteuerung wenigstens einer Stelleinrichtung abzuleiten, wobei die Steuereinrichtung einen zeitlichen Verlauf eines Sollwertes der Stellgröße vorgibt und wobei der zeitliche Verlauf des Sollwertes der Stellgröße stetig ist.

Der vorliegenden Erfindung liegt die Aufgabe zugrunde, ein Hybridfahrzeug und ein Verfahren bereitzustellen, dass eine kosten- und gewichtseffiziente Gestaltung des Hybridfahrzeugs mit einem elektrischen Zusatzverdichter ermöglicht.

Diese Aufgabe wird erfindungsgemäß durch ein Kraftfahrzeug nach Anspruch 1 und ein Verfahren nach Anspruch 11 gelöst.

Das erfindungsgemäße Kraftfahrzeug ist deshalb vorteilhaft, weil eine Prognose dazu genutzt wird, die gewünschte Fahrbarkeit möglichst energie- und/oder schadstoffeffizient bereitzustellen. Mit anderen Worten: Es geht nach diesem Aspekt der vorliegenden Erfindung nicht darum, die geforderte Fahrbarkeit ohne Berücksichtigung des Aufwands und der Folgen, bereitzustellen, sondern darum, dass die Fahrbarkeit unter Berücksichtigung von Aufwand und Folgen optimiert wird.

Hierdurch wird das Downsizing, d.h. das Bereitstellen von Kraftfahrzeugen mit kleineren Motoren bei vergleichbarer Fahrbarkeit, gefördert. Beispielsweise hat bei entsprechender erfindungsgemäßer Ausgestaltung ein Kraftfahrzeug mit einem 3-Zylinder-Motor mit einem Hubraum von 1.000 ccm eine Fahrbarkeit, welche mit der eines Fahrzeugs mit einem 4-Zylinder-Motor mit einem Hubraum von 2.000 ccm vergleichbar ist.

Des Weiteren ist es möglich Belastungsspitzen des Bordnetzes zu vermeiden, welche nach dem Stand der Technik den Einsatz von Zusatzladervorrichtungen erschweren, z. B. indem Zusatzladervorrichtungen nur bis zu den Grenzen der Systemspezifikation angesteuert werden können und nicht entsprechend dem aktuellen Bedarf oder indem die Bordnetze mit 3 allen damit verbundenen Nachteilen entsprechend leistungsstark ausgelegt werden müssen. Insbesondere bei hohen Sollladedrücken und damit verbunden hohen Drehzahlen und/oder Drehzahlgradienten der Zusatzladervorrichtung ist der Leistungsbedarf der Zusatzladervorrichtung zur Beschleunigung des Laufzeugs und Förderung des Luftmassenstroms kritisch. Dieser übersteigt beim Stand der Technik abhängig von der Systemauslegung häufig die maximale Leistung von 12- und 48-V-Bordnetzen. In einem erfindungsgemäßen Kraftfahrzeug kann die Prognose des Fahrzeugverhaltens dazu genutzt werden, die Komponenten, beispielsweise die Zusatzladervorrichtung, langsam und mit geringer Leistungsaufnahme hochzufahren.

Das erfindungsgemäße Konzept wird in Hybrid-Fahrzeugen eingesetzt. Hier sind einer erfindungsgemäßen Steuereinrichtung, insbesondere einer Motorsteuereinrichtung, über eine neben der Brennkraftmaschine bereitstehende elektromotorische Einrichtung zusätzliche Möglichkeiten gegeben, die Fahrbarkeit des Kraftfahrzeugs zu optimieren.

Unter einem "Kraftfahrzeug" im Sinne der vorliegenden Erfindung ist insbesondere ein durch einen Motor angetriebenes Landfahrzeug zu verstehen, also insbesondere Personenkraftwagen, Lastkraftwagen, Krafträder und Zugmaschinen. Das Kraftfahrzeug kann dabei als ausschließlich mit einer Brennkraftmaschine angetriebenes Fahrzeug, insbesondere in Form eines Mikro-Hybridfahrzeugs, welches eine Start-Stopp-Automatik und/oder eine Bremsenergierückgewinnungseinrichtung zum Laden einer Starterbatterie aufweist, ausgebildet sein. Des Weiteren kann das Kraftfahrzeug als Mildhybrid mit einer eine Brennkraftmaschine unterstützenden elektromotorischenEinrichtung oder als Vollhybrid ausgebildet sein, welches in der Lage ist allein mit Hilfe der elektromotorischen Einrichtung zu fahren, insbesondere einschließlich Anfahren und Beschleunigen. Das Kraftfahrzeug in Form eines Mild- oder Vollhybrid kann hinsichtlich der Systemstruktur als serieller Hybrid, als paralleler Hybrid, als leistungsverzweigender Hybrid, als Hybrid mit mechanischem Durchtrieb und/oder als straßengekoppelter Hybrid, bei dem die eine Achse durch die Brennkraftmaschine und die andere Achse von der elektromotorischen Einrichtung angetrieben wird, ausgebildet sein. Unabhängig von der Systemstruktur kann der Mild- oder Vollhybrid auch, in Form eines sog. Plug-In-Hybrids, von außen mit elektrischer Energie versorgt werden.

Unter einer "Brennkraftmaschine" im Sinne der vorliegenden Erfindung ist insbesondere eine Maschine zu verstehen, die mechanische Arbeit verrichtet, indem sie chemische Energie bei einem Verbrennungsvorgang in Bewegungsenergie umwandelt. Dazu gehören Maschinen mit äußerer Verbrennung und mit innerer Verbrennung und/oder mit zyklischer Verbrennung und/oder mit kontinuierlicher Verbrennung bzw. mit selbstzündender Zündeinleitung und/oder mit fremdzündener Zündeinleitung. Insbesondere wird unter einer Brennkraftmaschine ein Otto- oder Dieselmotor als Hubkolbenmotor, Drehkolbenmotor oder in anderer Bauweise verstanden.

Unter einer "Komponente" im Sinne der vorliegenden Erfindung ist insbesondere eine Einrichtung zu verstehen, welche dafür vorgesehen ist, die Drehmomentaufnahme und/oder -abgabe und/oder die Leistungsaufnahme und/oder -abgabe und/oder die Aufnahme und/oder Abgabe von festen, flüssigen oder gasförmigen Stoffen durch die Brennkraftmaschine zu verändern. Im Sinne der vorliegenden Erfindung ist die Brennkraftmaschine selbst keine solche Komponente. Komponenten im Sinne der vorliegenden Erfindung sind insbesondere Motorsteuerungseinrichtungen, wie Ladeluftkühler, insbesondere elektronisch geregelte Ladeluftkühler, insbesondere Luft-Luft-Ladeluftkühler und/oder Luft-Wasser-Ladeluftkühler, Bypassklappen, Abgasturbolader, Drosselklappen und dergleichen.

Unter einer "Sensoreinrichtung" im Sinne der vorliegenden Erfindung ist eine Einrichtung zu verstehen, welche zumindest aus einem (Messgrößen-)Aufnehmer besteht, der eine physikalisch messbare Messgröße erfasst. Die "Sensoreinrichtung" im Sinne der vorliegenden Erfindung kann weitere Elemente der Messkette umfassen, wie zum Beispiel Verstärker, Analog/Digital-Wandler, Codierer und dergleichen. Auch eine Empfängereinrichtung zum Empfang von drahtlos übertragenen Signalen von Sendeeinrichtungen in der Umgebung des Fahrzeugs, insbesondere von anderen Fahrzeugen und/oder der Infrastruktur und/oder von Satelliten stellen "Sensoreinrichtungen" im Sinne der vorliegenden Erfindung dar.

Unter "fahrzeugbezogenen Zustandsparametern" im Sinne der vorliegenden Erfindung sind vor allem fahrzeuginterne Zustandsparameter zu verstehen, welche durch fahrzeugeigene Sensoreinrichtungen bestimmt werden. Die fahrzeugbezogenen Zustandsparameter betreffen insbesondere den Antriebsstrang, die Fahrzeuggeschwindigkeit, das geforderte und/oder bereitgestellte Drehmoment, die Stellung eines Fahrmodusschalters, die Stellung des Lenkrades, der Pedalerie, des Ganghebels, des Blinkhebels, des Scheibenwischerhebels.

Unter "umgebungsbezogenen Zustandsparametern" im Sinne der vorliegenden Erfindung sind im Wesentlichen Zustandsparameter zu verstehen, welche das Umfeld, in welchem sich das Fahrzeug bewegt, charakterisieren. Die umgebungsbezogenen Zustandsparameter werden insbesondere aus der Fahrerassistenzsensorik, wie vorzugsweise Radar,

Lidar, Ultraschall, Kamerasystemen, insbesondere Kamerasysteme mit nachgeschalteter Schildererkennnung, und dergleichen, sowie aus Navigationsdaten, und hier vorzugsweise Straßenverlauf, Topologie, Geschwindigkeitslimits, Vorfahrtsregelungen und dergleichen, und/oder Wetterdaten bestimmt. Des Weiteren können umgebungsbezogene Zustandsparameter auch von anderen Fahrzeugen, insbesondere deren Position, Geschwindigkeit, Fahrtrichtung, Gefahrensituationen und dergleichen, und/oder Informationen bezüglich Ampelphasen und dergleichen über eine Car-to-X-Schnittstelle, insbesondere eine Car-to-Car-Schnittstelle und/oder eine Car-to-Infrastructure-Schnittstelle, z.B. über Telekommunikationseinrichtungen, wie Mobiltelefone und dergleichen, übermittelt werden. Unter einer "Bereitstellung" eines Zustandsparameters im Sinne der vorliegenden Erfindung wird neben einer analogen und/oder digitalen Messsignalaufbereitung auch eine Weiterverarbeitung, von Messwerten und/oder anderen Informationen, insbesondere durch die Steuereinrichtung, verstanden. Diese Weiterverarbeitung umfasst insbesondere Berechnungen, welche die Ermittlung eines Zustandsmodells als einer, insbesondere optionalen, Vorstufe der Fahrzeugverhaltensprognose und/oder die Berechnung der Fahrzeugverhaltensprognose, insbesondere direkt, vorbereiten.

Unter einer "Stelleinrichtung" im Sinne der vorliegenden Erfindung ist insbesondere eine Einrichtung zu verstehen, welche dafür vorgesehen ist, einen Ist-Wert einer Stellgröße wenigstens einer Komponente durch Änderung einer Betriebsgröße dieser wenigstens einen Komponente zu ändern und insbesondere einem vorgegebenen Sollwert für die Stellgröße anzunähern.

Unter einer "Stellgröße" im Sinne der vorliegenden Erfindung ist ein veränderbarer Parameter zu verstehen, welcher wenigstens zwei verschiedene Werte annehmen kann, wobei ein Wert auch null sein kann. Stellgrößen sind insbesondere der Aufladungsgrad durch eine Zusatzladervorrichtung, die Drosselklappenstellung, die Bypassklappenstellung und dergleichen.

Unter einer "Zusatzladervorrichtung" im Sinne der vorlegenden Erfindung ist ein elektrisch angetriebener Zusatzlader zu verstehen, welcher als elektrischer Zusatzverdichter ausgebildet ist. Die Zusatzladervorrichtung kann hierbei eine wenigstens im Wesentlichen eigenständige Einheit in einem Brennkraftmaschinenluftpfad eines Kraftfahrzeugs sein oder in einen, insbesondere elektrifizierten, Turbolader integriert sein, insbesondere in Form eines Turboladers mit integriertem Elektromotor.

Unter einer "Steuereinrichtung" im Sinne der vorliegenden Erfindung ist ein zentrales oder dezentrales System zu verstehen, welches dafür vorgesehen ist, Informationen zu empfangen, zu verarbeiten, auszugeben und gegebenenfalls Daten beliebiger Art, insbesondere ausgewählte Daten, zu speichern. Eine Steuereinrichtung im Sinne der vorliegenden Erfindung weist insbesondere wenigstens eine zentrale Verarbeitungseinheit (central processing unit, CPU) sowie eine Speichereinrichtung auf. Des Weiteren kann die Steuereinrichtung En-Codierer und/oder De-Codierer aufweisen, welche empfangene Informationen für die Verarbeitung durch die CPU aufbereiten und/oder abzugebende Informationen für die Abgabe, d.h. die Übertragung, insbesondere über ein BUS-System, vorbereiten.

Unter einem "Zustandsmodell" im Sinne der vorliegenden Erfindung ist insbesondere ein Datensatz oder sind insbesondere mehrere Datensätze zu verstehen, welche zumindest näherungsweise den Ist-Zustand des Fahrzeugs (z.B. Geschwindigkeit, Lenkradstellung, Gang, Gesamtgewicht), insbesondere in seiner aktuellen Umgebung (z.B. Straßenbelag, Wetter, Hindernisse, Straßenverlauf) und/oder in seiner aktuellen Fahrsituation (z.B. Beschleunigen, bei im Wesentlichen gleichbleibender Geschwindigkeit Fahren, Abbremsen, Überholen, Abbiegen etc.) beschreiben.

Unter einer "Fahrzeugverhaltensprognose" im Sinne der vorliegenden Erfindung ist insbesondere die Vorhersage einer zu erwartenden Veränderung bzw. einer Beibehaltung des Fahrzeugverhaltens zu verstehen. Die Prognose hängt vom Prognosehorizont ab, d.h. von dem Zeitraum für welchen eine Prognose abgegeben wird. Auch die Eintretenswahrscheinlichkeit der Prognose kann vorzugsweise, insbesondere in Abhängigkeit von der Zeitspanne des Prognosehorizonts, berücksichtigt werden. Der Prognosehorizont liegt nach einer bevorzugten Ausführungsform im Bereich von 10 ms bis 10 s, insbesondere im Bereich von 100 ms bis 7 s, bevorzugt im Bereich vom 500 ms bis 5 s. Im Zuge der Berechnung der Fahrzeugverhaltensprognose werden insbesondere mehrere mögliche Szenarien ermittelt und hinsichtlich ihrer Eintretenswahrscheinlichkeit bewertet. Die möglichen Szenarien werden unter Gewichtung mittels ihrer Eintretenswahrscheinlichkeit zu einer szenarienübergreifenden Fahrzeugverhaltensprognose zusammengefasst.

Unter der "Fahrbarkeit" im Sinne der vorliegenden Erfindung ist die qualitative und/oder quantitative Bewertung, insbesondere, aber nicht nur bei Veränderungen eines oder mehrerer fahrzeugbezogener Parameter, und insbesondere des Verhaltens eines Fahrzeugs, im Hinblick auf Beschleunigung, Gaswegnahme, Bremsen, Ruckelschwingungen und/oder Schwingungen beim Gangwechsel, und dergleichen zu verstehen. Maßstab für dieses Verhalten ist der subjektive Eindruck des Fahrers und der Passagiere, der insbesondere durch die Bewegung der Karosserie, und insbesondere durch Schwingungen in Längsrichtung, hervorgerufen wird.

Unter dem "Betriebsverhalten" einer Komponente im Sinne der vorliegenden Erfindung ist insbesondere die Veränderung der Funktionsparameter der Komponente zu verstehen, also z.B. die eingestellte Winkelstellung der Nockenwelle, die Einspritzmenge des Kraftstoffs und/oder der Einspritzzeitpunkt, die Anforderung an den Abgasturbolader, die Menge der Abgasrückführung und dergleichen.

Nach einer bevorzugten Ausführungsform bildet die Steuereinrichtung das Zustandsmodell zu einem Zeitpunkt t₀ und prognostiziert eine Veränderung des Fahrzeugverhaltens bis zu einem Zeitpunkt t₁, wobei die Initiierung der Ansteuerung zu einem Zeitpunkt t_{A} erfolgt, wobei t₀ ≤ t_{A} < t₁ ist.

Nach einer bevorzugten Ausführungsform wird t_{A} durch die Steuereinrichtung so bestimmt, dass die Fahrbarkeit und andererseits die Drehmoment- und/oder Leistungsaufnahme der wenigstens einen Komponente, vorzugsweise auch weiterer Komponenten des Fahrzeugs optimiert werden.

Dies hat den Vorteil, dass der Zeitpunkt der Initiierung der Ansteuerung an das Betriebsverhalten der Komponente angepasst werden kann. Zum Beispiel muss ein Abgasturbolader nicht sofort hochgefahren werden, wenn ein Leistungsabruf in z.B. vier Sekunden erwartet wird, sondern dieser Zeitpunkt wird so gewählt, dass die als benötigt prognostizierte Leistung erst zu dem prognostizierten Zeitpunkt bereitgestellt wird. Ein solches System ist bevorzugt in der Lage, Energie zu sparen und den Abgasausstoß zu senken. Mögliche Optimierungskriterien sind des Weiteren auch die Verlängerung der Lebensdauer wenigstens einer Komponente, bevorzugt mehrerer Komponenten, noch bevorzugter des Gesamtfahrzeugs. Insbesondere kann auch die Energieaufnahme der Komponenten minimiert werden.

Nach einer bevorzugten Ausführungsform wird der zeitliche Verlauf des Sollwertes der Stellgröße durch die Steuereinrichtung so bestimmt, dass einerseits die Fahrbarkeit und andererseits die Drehmoment- und/oder Leistungsaufnahme und/oder -abgabe der wenigstens einen Komponente des Fahrzeugs optimiert wird.

Der zeitliche Verlauf ist in einer Darstellung, in welcher auf der x-Achse die Zeit und auf der y-Achse die Ziel- und/oder Ist-Größe dargestellt ist, bevorzugt eine ansteigende oder abfallende Rampe, eine optimierte Kurvenform, welche gegebenenfalls regelungstechnisch erzeugte Über- oder Unterschwinger aufweist, eine angenäherte stufenförmige Funktion oder eine andere beliebige Übergangsfunktion.

Der zeitliche Verlauf des Sollwertes der Stellgröße ist stetig.

Dies hat den Vorteil, dass das elektrische Bordnetz und/oder mechanische Verbindungen der betreffenden Komponente nicht sprungartigen Lastveränderungen unterworfen sind und deshalb das Bordnetz so ausgelegt werden kann, dass es derartige Lastveränderungen nicht auffangen muss.

Dies gestattet auch eine kosten- und gewichtseffiziente Gestaltung, insbesondere des leistungsführenden, elektrischen Bordnetzes, da Leistungsspitzen vermieden werden und somit auch kleinere Leitungsquerschnitte ausreichen können, wodurch ein spürbarer Beitrag zur Gewichtsersparnis geleistet werden kann.

Nach einer bevorzugten Ausführungsform sind die Sensoreinrichtungen ausgewählt aus der nicht-abschließenden Gruppe, bestehend aus: Sensorvorrichtungen des Antriebsstrangs, Fahrerassistenzsysteme, bevorzugt Radar, Lidar, Ultraschall und/oder Kamerasysteme, Navigationseinrichtungen, Wettersensoreinrichtungen, Fahrmodusschalter und/oder Bedienelemente für den Fahrer, bevorzugt Pedalerie, Ganghebel und Getriebemodusschalter, Blinkerhebel und/oder Scheibenwischerhebel.

Nach einer bevorzugten Ausführungsform ist die Steuereinrichtung dafür vorgesehen, die spezifischen Fahranforderungen eines individuellen Fahrers des Fahrzeugs zu erfassen, daraus wenigstens ein Fahrerprofil zu erstellen und die somit gewonnen Erkenntnisse in die Prognose mit aufzunehmen.

Dadurch kann die individuelle Fahrweise des Fahrers erfasst und berücksichtigt werden. Dies ermöglicht beispielsweise die Prognose, ob ein individueller Fahrer in einer bestimmten Situation auf der Landstraße ein vor ihm fahrendes langsameres Fahrzeug überholen wird oder nicht.

Nach einer bevorzugten Ausführungsform ist die Steuereinrichtung dafür vorgesehen, die Prognosezuverlässigkeit des Fahrerprofils, bevorzugt kontinuierlich, in Form einer Selbstoptimierung zu verbessern.

Nach einer bevorzugten Ausführungsform ist die Steuereinrichtung dafür vorgesehen, eine Mehrzahl von Fahrerprofilen zu erstellen und zu verwalten.

Nach einer bevorzugten Ausführungsform ist die wenigstens eine Komponente ein Abgasturbolader und/oder eine Zusatzladervorrichtung.

Damit kann - auch bei einem Motor mit kleinerem Hubraum - das Drehmoment und/oder die Leistung erhöht werden. Insbesondere die Zusatzladervorrichtung ist vorteilhaft, da er sehr einfach zu steuern ist und keine Verluste erzeugt, wenn er nicht benötigt wird.

Nach einer bevorzugten Ausführungsform ist die Steuereinrichtung dafür vorgesehen, die Drehmomentabgabe der Brennkraftmaschine anzuheben, wenn im Rahmen der Prognose eine Anforderung nach der Erhöhung des Drehmoments im Antriebstrang zu erwarten ist und der Ladezustand der Fahrzeugbatterie gering ist, kann die Drehmomentabgabe des Motors erhöht werden und das erhöhte Drehmoment zur Aufladung der Batterie verwendet werden. Wird dann die Drehmomenterhöhung im Antriebstrang angefordert, wird der Anteil des Drehmoments, der zur Batterieladung verwendet wird, reduziert oder auf Null gebracht und dieser Anteil des Drehmoments dem Antriebstrang zugeführt. Ferner kann die wieder besser aufgeladene Batterie dazu verwendet werden, den Ladedruck durch elektrisches Pusten oder durch einen elektrischen Zusatzlader zu erhöhen.

Entsprechend kann auch verfahren werden, wenn die erhöhte Drehmomentanforderung nicht aus dem Antriebstrang zu erwarten ist, sondern z. B. durch das Einschalten von Zusatzgeräten wie der Klimaanlage und dergleichen.

Ein erfindungsgemäßes Verfahren wird in Anspruch 11 beschrieben.

Nach einer bevorzugten Ausführungsform berechnet die Steuereinrichtung zu einem Zeitpunkt t₀ die Veränderung des Fahrzeugverhaltens zu einem Zeitpunkt t₁ und initiiert die Ansteuerung dieser Stelleinrichtung zu einem Zeitpunkt t_{A}, wobei t₀ < t_{A} < t₁ ist.

Nach einer bevorzugten Ausführungsform wird t_{A} und/oder der zeitliche Verlauf des Sollwertes der Stellgröße so bestimmt, dass einerseits die Fahrbarkeit und andererseits die Drehmoment- und/oder Leistungsaufnahme und/oder -abgabe der wenigstens einen Komponente des Fahrzeugs berücksichtigt wird.

Bezüglich der Vorteile der Ausführungsformen des Verfahrens wird auf die obigen Erläuterungen zu den verschiedenen Ausführungsformen des Fahrzeugs verwiesen, welche hier im selben Umfang Gültigkeit besitzen.

Weitere vorteilhafte Weiterbildungen der vorliegenden Erfindung ergeben sich aus den Unteransprüchen und der nachfolgenden Beschreibung bevorzugter Ausführungsformen en. Hierzu zeigt, teilweise schematisiert:
- Fig. 1: eine schematische Ansicht eines exemplarischen Brennkraftmaschinenluftpfades mit seriell angeordneter Zusatzladervorrichtung;
- Fig. 2: eine schematische Funktionsdarstellung des Fahrzeugs;
- Fig. 3: ein Flussdiagramm eines erfindungsgemäßen Verfahrens zur prädiktiven Ansteuerung eines Kraftfahrzeugs; und
- Fig. 4: Diagramme zur Darstellung des Einflusses einer Zusatzaufladung auf die Fahrbarkeit.

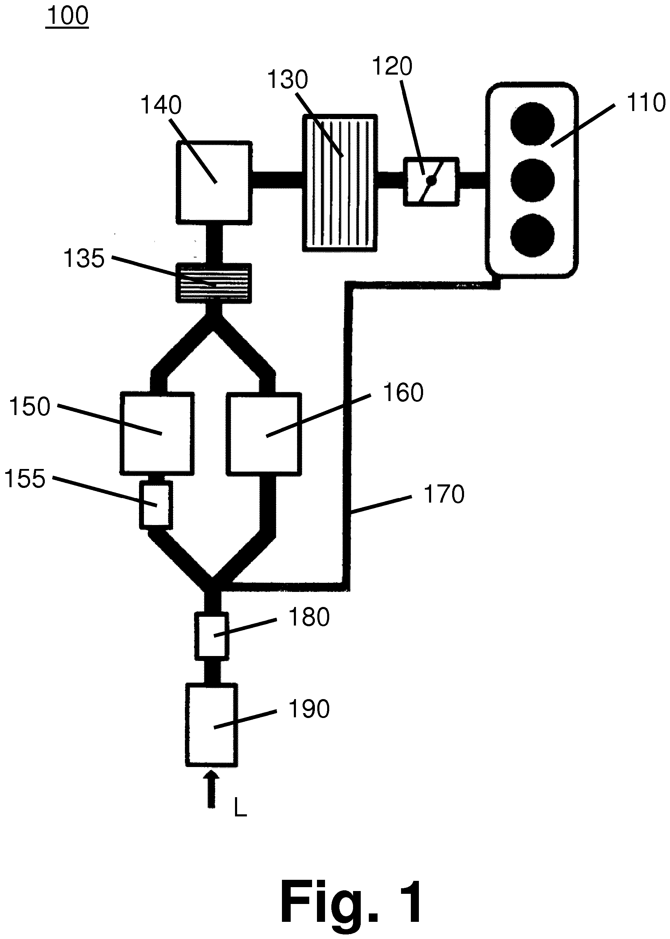

Fig. 1 zeigt eine schematische Ansicht eines exemplarischen Brennkraftmaschinenluftpfades 100 mit seriell angeordneter Zusatzladervorrichtung in Form eines elektrischen Zusatzverdichters 150. In Richtung der Lufteinströmrichtung L, in Fig. 1 durch einen Pfeil dargestellt, ist eingangsseitig ein Luftfilter190 angeordnet. Mit diesem ist ein Luftmassenmesser, insbesondere ein Heißfilmluftmassenmesser 180 gasführend verbunden. In Lufteinströmrichtung L gesehen hinter dem Heißfilmluftmassenmesser 180 gabelt sich die gasführende Verbindung: In einem ersten Zweig ist der elektrische Zusatzverdichter 150 angeordnet und in zweiten Zweig ist eine Bypassklappe 160 angeordnet, mit welcher ein Luftstrom an dem elektrischen Zusatzverdichter 150 vorbei an die in Lufteinströmrichtung gesehen stromabwärtig angeordneten Einrichtungen, welche im Folgenden beschrieben werden, ermöglicht wird. In dem ersten Zweig ist in Lufteinströmrichtung L gesehen vor dem elektrischen Zusatzverdichter 150 ein weiterer Heißfilmluftmassenmesser 155 angeordnet, welcher den Luftstrom in dem ersten Zweig bestimmt. In Lufteinströmrichtung L gesehen nach dem elektrischen Zusatzverdichter 150 und der Bypassklappe 160 verbinden sich die beiden Zweige wieder zu einer einzigen gasführenden Verbindung, welche mit einem ersten Ladeluftkühler 135 gasführend verbunden ist. Der erste Ladeluftkühler 135 ist mit einem Abgasturbolader 140 gasführend verbunden.

Der erste Ladeluftkühler 135 ist eine optionale Komponente. Alternativ können die beiden Zweige, nachdem sie sich wieder zu einer einzigen gasführenden Verbindung verbunden haben, direkt mit dem Abgasturbolader 140 verbunden sein.

Der Abgasturbolader 140 ist mit einem zweiten Ladeluftkühler 130 gasführend verbunden. Der zweite Ladeluftkühler 130 ist über eine Drosselklappe 120 mit einer Brennkraftmaschine 110 gasführend verbunden. Die Brennkraftmaschine 110 ist zusätzlich über eine Kurbelgehäuseentlüftung 170 mit der gasführenden Verbindung zwischen dem Heißfilmluftmassenmesser 180 und der oben beschriebenen Gabelung verbunden.

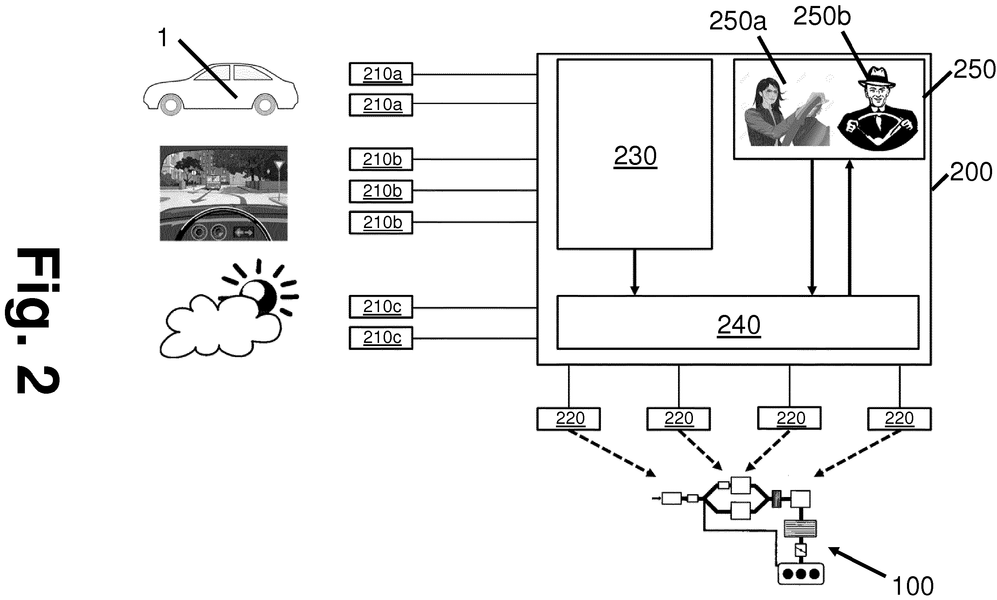

Fig. 2 zeigt eine schematische Funktionsdarstellung eines Fahrzeugs 1. Über Sensoreinrichtungen 210 werden Messwerte und/oder andere Daten erfasst. Unter der Referenznummer 210 werden Sensoreinrichtungen 210a zur Erfassung von Fahrzeugparametern, Sensoreinrichtungen 210b zur Erfassung von Umgebungsparametern und Sensoreinrichtungen 210c zur Erfassung von Umweltparametern zusammengefasst und gemeinsam beschrieben.

Fahrzeugparameter sind insbesondere Parameter des Antriebsstrangs, z.B. die Geschwindigkeit des Fahrzeugs 1, aber ebenso das Gewicht des Fahrzeugs 1, möglicherweise sogar die Verteilung des Gewichts auf die einzelnen Räder, der Luftdruck in den Reifen, die Lenkradstellung, der gewählte Gang, die Stellung des Gas- und Bremspedals etc. Entsprechende Sensoreinrichtungen 210a sind beispielsweise Drucksensoren, Winkelsensoren, Wegsensoren etc.

Umgebungsparameter betreffen insbesondere die aktuelle Fahrsituation, z.B. die Position, Geschwindigkeit und Richtung vor, nach und/oder neben dem Fahrzeug 1 befindlicher Fahrzeuge sowie Informationen über den vor dem Fahrzeug 1 liegenden Streckenabschnitt, z.B. Straßenführung, Vorfahrtsregelung, aktuelle und/oder prognostizierte Ampelphase, Steigung der Fahrbahn, Untergrund etc. Entsprechende Sensoreinrichtungen 210b bzw. entsprechende Informationsquellen sind z.B. ein Navigationssystem des Fahrzeugs 1, Sensoreinrichtungen von Fahrerassistenzsystemen, insbesondere Kameras, Radar, Lidar, Car-to-X-Schnittstellen etc.

Umweltparameter betreffen insbesondere das aktuelle Wetter, in welchem sich das Fahrzeug 1 bewegt. Entsprechende Parameter sind bevorzugt die Temperatur, der Luftdruck der Umgebungsluft, insbesondere zur Vorhersage von Wetterveränderungen, Vorliegen von Regen- und/oder Schneefall, Regenniederschlags- und/oder Schneefallmenge, auf dem Untergrund befindliche Schneemenge, Glättegrad etc. Entsprechende Sensoreinrichtungen 210c sind z.B. Temperatursensoren, Luftdrucksensoren, Regensensoren etc.

Die Messwerte und/oder Daten der Sensoreinrichtungen 210 werden, bevorzugt über ein fahrzeuginternes BUS-System, an eine Steuereinrichtung 200 übertragen. Die Steuereinrichtung 200 ist weiterhin, bevorzugt über ein BUS-System, mit Stelleinrichtungen 220 verbunden, welche dafür vorgesehen sind, wenigstens eine veränderbaren Stellgröße einer Komponente zu verändern, welche den Betriebszustand der Brennkraftmaschine beeinflusst. Beispiele für die Stelleinrichtungen 220 sind unter anderem Komponenten im Brennkraftmaschinenluftpfad 100, bevorzugt der Abgasturbolader 140, der elektrische Zusatzverdichter 150 und/oder die Bypassklappe 160.

Die Steuereinrichtung 200 weist eine Zustandsmodellermittlungseinrichtung 230, eine Prognoseberechnungseinrichtung 240 und eine Fahrerprofilverwaltungseinrichtung 250 auf.

Die Zustandsmodellermittlungseinrichtung 230 ist dafür vorgesehen, aus den Messwerten und/oder Daten der Sensoreinrichtungen 210 ein Zustandsmodell zu ermitteln. Dieses Zustandsmodell ist eine multikriterielle Abbildung des aktuellen Ist-Zustands des Fahrzeugs (z.B. Geschwindigkeit, Lenkradstellung, Gang, Gesamtgewicht) in seiner aktuellen Umgebung (z.B. Straßenbelag, Wetter, Hindernisse, Straßenverlauf) und in seiner aktuellen Fahrsituation (z.B. Beschleunigen, bei im Wesentlichen gleichbleibender Geschwindigkeit Fahren, Abbremsen, Überholen, Abbiegen).

Die Fahrerprofilverwaltungseinrichtung 250 verwaltet in der in Fig. 2 dargestellten Ausführungsform exemplarisch zwei Fahrerprofile 250a, 250b, welche jeweils unterschiedlichen Fahrern zugeordnet sind. Es versteht sich von selbst, dass die Fahrerprofilverwaltungseinrichtung 250 auch weniger oder mehr Fahrerprofile verwalten kann. Hierbei können die Fahrerprofile dergestalt angelegt werden, dass jedem Fahrer des Fahrzeugs 1 ein personenspezifisches Profil zugeordnet ist. Des Weiteren ist es aber zusätzlich oder alternativ auch möglich, dass für einen Fahrer mehrere Profile angelegt werden, z.B. "eco", "comfort", "sportlich", "hochsportlich" oder dergleichen, welche dann von dem Fahrer entsprechend seiner aktuellen Lebenssituation ausgewählt werden können.

Unter Berücksichtigung eines vom Fahrer oder automatisch ausgewählten Fahrerprofils 250a, 250b wird in der Prognoseberechnungseinrichtung 240 eine Prognose des Fahrzeugverhaltens während des zeitlich in der Zukunft liegenden Prognosehorizonts berechnet.

Aus dieser Prognose werden Sollgrößenänderungen ermittelt, welche an die jeweilige Stelleinrichtung 220, bevorzugt über ein BUS-System, übertragen wird.

Aufgrund zeitlich nachfolgend eingehender Daten und/oder Messwerten wird der Grad des Eintretens der Prognose evaluiert. Werden hierbei Abweichungen festgestellt, welche dem aktuellen Fahrer zuzuordnen sind, so wird das jeweilige Fahrerprofil 250a, 250b entsprechend aktualisiert, um die Prognosezuverlässigkeit kontinuierlich zu verbessern. Diese Aktualisierung erfolgt durch die Prognoseberechnungseinrichtung 240 und/oder die Fahrerprofilverwaltungseinrichtung 250.

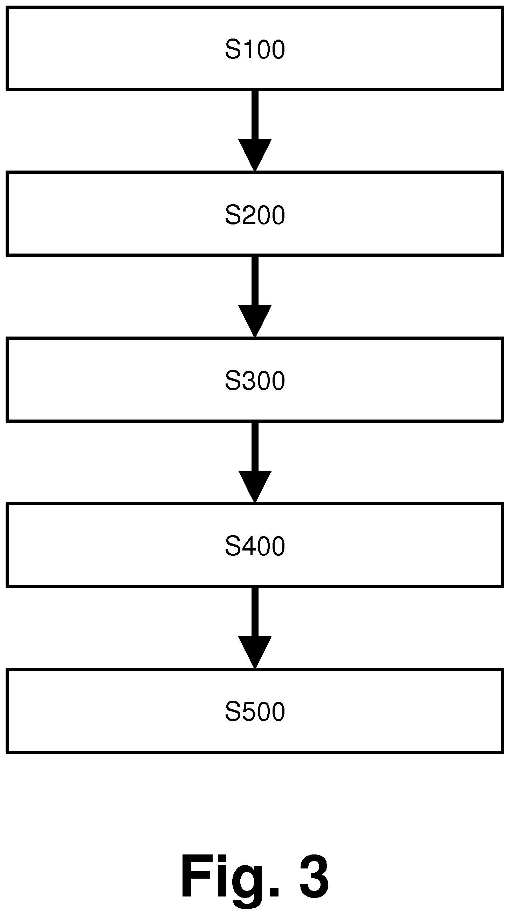

In Fig. 3 ist ein Flussdiagramm eines erfindungsgemäßen Verfahrens zur prädiktiven Ansteuerung eines Kraftfahrzeugs 1 gezeigt, wobei das Kraftfahrzeug 1 wenigstens einen ersten Antriebsmotor, der als Brennkraftmaschine 110 ausgebildet ist, und wenigstens eine Komponente 270 aufweist, welche den Betriebszustand der Brennkraftmaschine (110) beeinflusst und wenigstens eine veränderbare Stellgröße aufweist.

In Schritt S100 werden wenigstens zwei fahrzeug- und/oder umgebungsbezogene Zustandsparameter erfasst und bereitgestellt. Dies erfolgt nach einer Ausführungsform durch die Sensoreinrichtungen 210.

In Schritt S200 werden die bereitgestellten Zustandsparameter empfangen und verarbeitet. Dies erfolgt nach einer bevorzugten Ausführungsform durch die Steuereinheit 200.

In Schritt S300 wird ein Zustandsmodell unter Berücksichtigung dieser Zustandsparameter ermittelt. Dies erfolgt nach einer bevorzugten Ausführungsform durch die Zustandsmodellermittlungseinrichtung 230 der Steuereinheit 200.

In Schritt S400 wird eine Prognose des Fahrzeugverhaltens unter Heranziehung dieses Zustandsmodells berechnet. Dies erfolgt nach einer bevorzugten Ausführungsform durch die Prognoseberechnungseinrichtung 240 der Steuereinheit 200.

In Schritt S500 wird wenigstens eine Stelleinrichtung 220 angesteuert, welche dafür vorgesehen ist, wenigstens eine veränderbare Stellgröße wenigstens einer Komponente 270 zu verändern, in Abhängigkeit der Prognose, wobei die Ansteuerung so bestimmt wird, dass einerseits die Fahrbarkeit und andererseits die Drehmoment- und/oder Leistungsaufnahme und/oder -abgabe der wenigstens einen Komponente 270 des Fahrzeugs 1 berücksichtigt wird.

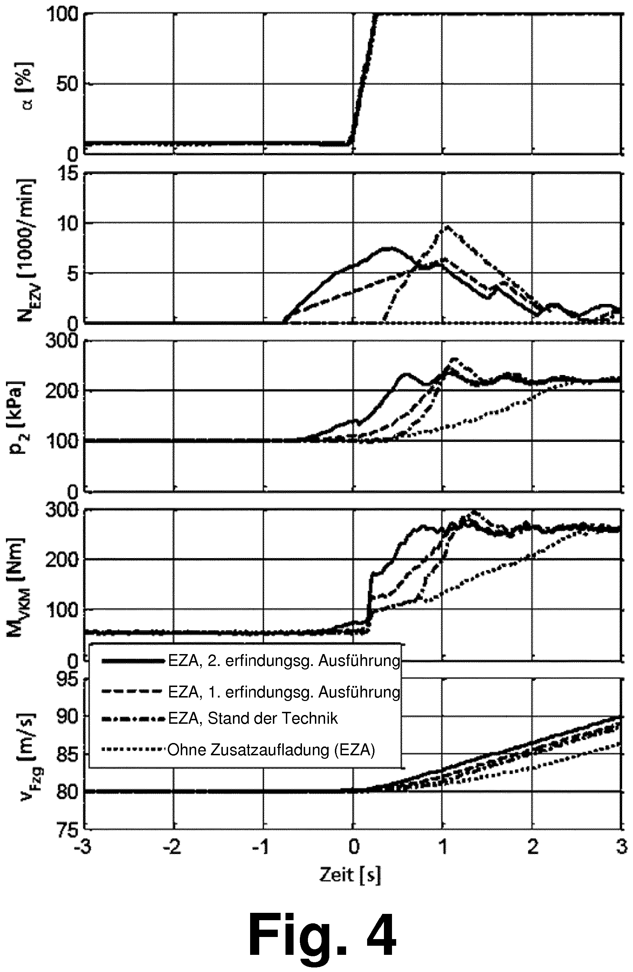

Fig. 4 zeigt verschiedene Diagramme zur Darstellung des Einflusses einer Zusatzaufladung auf die Fahrbarkeit. Von oben nach unten stellen die Diagramme dar:
Lastanforderung des Fahrers in % über die Zeit in s;
Drehzahl der Zusatzladervorrichtung in 1.000/min über die Zeit in s;
Bereitgestellter Ladedruck in kPa über die Zeit in s;
Drehmoment der Brennkraftmaschine in Nm über die Zeit in s; und
Geschwindigkeit des Kraftfahrzeugs in m/s über die Zeit in s.

Die einzelnen Kurven in den Diagrammen geben dabei jeweils das Verhalten des Kraftfahrzeugs sowie - soweit vorhanden - der Zusatzladervorrichtung an für Kraftfahrzeuge
(a) ohne Zusatzladervorrichtung;
(b) mit Zusatzladervorrichtung nach dem Stand der Technik;
(c) mit Zusatzladervorrichtung und prädiktiver Ansteuerung nach einer ersten Ausführung der vorliegenden Erfindung; und
(d) mit Zusatzladervorrichtung und prädiktiver Ansteuerung nach einer zweiten Ausführung der vorliegenden Erfindung.

In allen Fällen gibt der Fahrer bei 0 s einen Lastsprung auf den Fahrpedalwert α = 100 % vor, um von einer konstanten Folgefahrt bei einer Geschwindigkeit von 80 km/h aus maximal zu beschleunigen. Bereits der Einsatz der konventionellen Zusatzladervorrichtungsansteuerung erzielt eine deutliche Verbesserung des Drehmomentaufbaus und daraus resultierend eine schneller anliegende Maximalbeschleunigung und höhere Fahrzeuggeschwindigkeit nach 3 s. Durch Prädiktion wird die Drehmomentdynamik des Verbrennungsmotors noch einmal signifikant gesteigert. Der prädiktive Ladedruckaufbau 1 s vor dem fahrerinitiierten Lastsprung erhöht das quasi-saugmotorische Moment zu Beginn des Lastsprungs. Zudem verbessert sich durch die von Beginn an gesteigerte Abgasenthalpie das Ansprechverhalten des konventionellen Turboladers und damit der weitere Ladedruckaufbau.

Das Niveau des quasi-saugmotorischen Drehmoments wird bestimmt vom verfügbaren Ladedruck zum Zeitpunkt des Lastsprungs und somit von der zu diesem Zeitpunkt anliegenden Drehzahl der Zusatzladervorrichtung. Je höher die prädiktiv eingeregelte Sollladedruck, desto dynamischer ist das vom Fahrer wahrgenommene Verhalten des Kraftfahrzeugs.

**Bezungszeichenliste**

| | |
|---|---|
| 1 | Kraftfahrzeug |
| 100 | Brennkraftmaschinenluftpfad |
| 110 | Brennkraftmaschine |
| 120 | Drosselklappe |
| 130 | Ladeluftkühler |
| 135 | Ladeluftkühler |
| 140 | Abgasturbolader |
| 150 | Elektrischer Zusatzverdichter |
| 155 | Heißfilmluftmassenmesser |
| 160 | Bypassklappe |
| 170 | Kurbelgehäuseentlüftung |
| 180 | Heißfilmluftmassenmesser |
| 190 | Luftfilter |
| 200 | Steuereinrichtung |
| 210 | Sensoreinrichtung (allgemein) |
| 210a | Sensoreinrichtung zur Erfassung von Fahrzeugparametern |
| 210b | Sensoreinrichtung zur Erfassung von Umgebungsparametern |
| 210c | Sensoreinrichtung zur Erfassung von Umweltparametern |
| 220 | Stelleinrichtung |
| 230 | Zustandsmodellermittungseinrichtung |
| 240 | Prognoseberechnungseinrichtung |
| 250 | Fahrerprofilverwaltungseinrichtung |
| 250a | Fahrerprofil 1 |
| 250b | Fahrerprofil 2 |
| 260 | Ansteuerungseinrichtung |
| 270 | Komponente |
| | |
| S100 | Erfassen und Bereitstellen von Zustandsparametern |
| S200 | Empfangen und Verarbeiten von Zustandsparameter |
| S300 | Ermitteln eines Zustandsmodells |
| S400 | Berechnen einer Prognose des Fahrzeugverhaltens |
| S500 | Ansteuern wenigstens einer Stelleinrichtung |
| | |
| L | Lufteinströmrichtung |

## Patentansprüche

1. Hybrid-Kraftfahrzeug **(1)** mit:
einem Antriebssystem, welches wenigstens einen ersten Antriebsmotor, der als Brennkraftmaschine **(110)** ausgebildet ist, aufweist;
einem elektrischen Zusatzverdichter **(150),** welcher den Betriebszustand der Brennkraftmaschine **(110)** und hierdurch die Fahrbarkeit des Hybrid-Kraftfahrzeugs (1) beeinflusst und wenigstens eine veränderbare Stellgröße aufweist;
wenigstens einer ersten Sensoreinrichtung **(210),** welche dafür vorgesehen ist, wenigstens einen fahrzeug- und/oder umgebungs- und/oder umweltbezogenen Zustandsparameter zu erfassen und einen diesen repräsentierenden Datenwert bereitzustellen;
wenigstens einer Stelleinrichtung **(220),** welche dafür vorgesehen ist, wenigstens eine der veränderbaren Stellgrößen des elektrischen Zusatzverdichters **(150)** zu verändern; und
einer Steuereinrichtung **(200),** welche dazu eingerichtet ist, die Datenwerte der ersten Sensoreinrichtung **(210)** zu verarbeiten und ein Signal an die Stelleinrichtung **(220)** zu übermitteln, um diese zu veranlassen, die wenigstens eine der veränderbaren Stellgrößen des elektrischen Zusatzverdichters **(150)** zu verändern, um damit den Betriebszustand der Brennkraftmaschine **(110)** im Hinblick auf Veränderungen eines oder mehrerer fahrzeugbezogener Parameter im Hinblick auf Beschleunigung, Gaswegnahme, Bremsen, Ruckelschwingungen und/oder Schwingungen beim Gangwechsel, und dergleichen des Hybrid-Kraftfahrzeugs **(1)** zu beeinflussen,
wobei die Steuereinrichtung **(200)** dafür vorgesehen ist, aus diesem wenigstens einen fahrzeug- und/oder umgebungs- und/oder umweltbezogenen Zustandsparameter eine Fahrzeugverhaltensprognose zu berechnen und daraus einen Steuerwert oder einen Steuerdatensatz zur Ansteuerung dieser wenigstens einen Stelleinrichtung **(220)** abzuleiten,
wobei die Steuereinrichtung den zeitlichen Verlauf eines Sollwertes der Stellgröße vorgibt und wobei der zeitliche Verlauf des Sollwertes der Stellgröße stetig ist.

2. Hybrid-Kraftfahrzeug nach Anspruch 1, **dadurch gekennzeichnet, dass** das Antriebssystem aus einer Gruppe ausgewählt ist, bestehend aus: einem Antriebssystem mit einem Mildhybrid und/oder einem Vollhybrid, wobei der Mild- oder Vollhybrid hinsichtlich der Systemstruktur bevorzugt als serieller Hybrid, als paralleler Hybrid, als leistungsverzweigender Hybrid, als Hybrid mit mechanischem Durchtrieb und/oder als straßengekoppelter Hybrid, ausgebildet ist.

3. Hybrid-Kraftfahrzeug nach einem der vorhergehenden Ansprüche, wobei die Steuereinrichtung **(200)** die Prognose zu einem Zeitpunkt t₀ erstellt und eine Veränderung des Fahrzeugverhaltens zum Zeitpunkt t₁ prognostiziert wird, wobei die Initiierung der Ansteuerung zum Zeitpunkt t_{A} erfolgt, wobei t₀ ≤ t_{A} < t₁ ist und wobei bevorzugt t_{A} durch die Steuereinrichtung **(200)** so bestimmt wird, dass die Fahrbarkeit und/oder die Drehmoment- und/oder Leistungsaufnahme und/oder -abgabe der wenigstens einen Komponente **(270)** des Hybrid-Kraftfahrzeugs **(1)** berücksichtigt wird.

4. Hybrid-Kraftfahrzeug nach einem der vorhergehenden Ansprüche, wobei die Sensoreinrichtungen **(210)** ausgewählt sind aus der Gruppe, bestehend aus: Sensorvorrichtungen des Antriebsstrangs, Fahrerassistenzsysteme, insbesondere Radar, Lidar, Ultraschall und/oder Kamerasysteme, Navigationseinrichtungen, Wettersensoreinrichtungen, Fahrmodusschalter und/oder Fahrerschnittstellen, insbesondere Pedalerie, Gangwahl, Blinker und/oder Scheibenwischer.

5. Hybrid-Kraftfahrzeug nach einem der vorhergehenden Ansprüche, wobei die Steuereinrichtung **(200)** dafür vorgesehen ist, die spezifischen Fahranforderungen eines individuellen Fahrers des Hybrid-Kraftfahrzeugs **(1)** zu erfassen, daraus wenigstens ein Fahrerprofil zu erstellen und die somit gewonnen Erkenntnisse in die Prognose mit aufzunehmen.

6. Hybrid-Kraftfahrzeug nach Anspruch 5, wobei die Steuereinrichtung **(200)** dafür vorgesehen ist, die Prognosezuverlässigkeit des Fahrerprofils, bevorzugt kontinuierlich, in Form einer Selbstoptimierung zu verbessern.

7. Hybrid-Kraftfahrzeug nach einem der vorhergehenden Ansprüche, wobei das Hybrid-Kraftfahrzeug ferner einen Abgasturbolader **(140)** aufweist.

8. Hybrid-Kraftfahrzeug nach einem der vorhergehenden Ansprüche, wobei die Steuereinrichtung **(200)** dafür vorgesehen ist, den Lastpunkt der Brennkraftmaschine **(110)** anzuheben, sofern im Prognosehorizont eine Anforderung nach Erhöhung des Drehmoments erwartet wird und sich eine Batterie auf einem niedrigen Landeniveau, insbesondere auf einem Ladeniveau 50 % oder weniger der zu diesem Zeitpunkt nutzbaren Kapazität der Batterie befindet.

9. Hybrid-Kraftfahrzeug nach Anspruch 8 in Abhängigkeit von Anspruch 7, wobei die Steuereinrichtung **(200)** dafür vorgesehen ist, insbesondere wenigstens im Wesentlichen gleichzeitig mit der Anhebung des Lastpunkts der Brennkraftmaschine **(110),** die Drehzahl des Abgasturboladers **(140)** anzuheben.

10. Hybrid-Kraftfahrzeug nach einem der vorhergehenden Ansprüche 8 oder 9, wobei die Steuereinrichtung **(200)** dafür vorgesehen ist, zum Zeitpunkt der Drehmomentanforderung wenigstens eine der folgenden Maßnahmen einzuleiten:
a. Umschalten mindestens eines Teils des erhöhten Drehmoments der Brennkraftmaschine auf den Abtrieb;
b. Ausnutzen der erhöhten Turbolader-, insbesondere Abgasturbolader-, Drehzahl zur Erhöhung des Gradienten des Ladedrucks;
c. Antreiben des Zusatzladers mit der, insbesondere nach der Aufladung, in der Batterie vorhandenen Energie.

11. Verfahren zur prädiktiven Ansteuerung eines Hybrid-Kraftfahrzeugs **(1)** mit wenigstens einem ersten Antriebsmotor, der als Brennkraftmaschine **(110)** ausgebildet ist, und einem elektrischen Zusatzverdichter **(150),** welcher den Betriebszustand der Brennkraftmaschine **(110)** und hierdurch die Fahrbarkeit des Hybrid-Kraftfahrzeugs **(1)** beeinflusst und wenigstens eine veränderbare Stellgröße aufweist, mit den Schritten:
(a) Erfassen und Bereitstellen von wenigstens zwei fahrzeug- und/oder umgebungsbezogenen Zustandsparametern;
(b) Empfangen und Verarbeiten der bereitgestellten Zustandsparameter;
(c) Ermitteln eines Zustandsmodells basierend auf diesen Zustandsparametern;
(d) Berechnen einer Prognose des Fahrzeugverhaltens basierend auf diesem Zustandsmodell; und
(e) Ansteuern von wenigstens einer Stelleinrichtung **(220)** in Abhängigkeit der Prognose, wobei die Stelleinrichtung **(220)** dafür vorgesehen ist, die wenigstens eine veränderbare Stellgröße des elektrischen Zusatzverdichters **(150)** zu verändern, um damit den Betriebszustand der Brennkraftmaschine **(110)** im Hinblick auf Veränderungen eines oder mehrerer fahrzeugbezogener Parameter im Hinblick auf Beschleunigung, Gaswegnahme, Bremsen, Ruckelschwingungen und/oder Schwingungen beim Gangwechsel, und dergleichen des Hybrid-Kraftfahrzeugs **(1)** zu beeinflussen,
wobei die Ansteuerung so bestimmt wird, dass einerseits die Fahrbarkeit und andererseits die Drehmoment- und/oder Leistungsaufnahme und/oder -abgabe des elektrischen Zusatzverdichters **(150)** des Fahrzeugs **(1)** berücksichtigt wird,
wobei die Steuereinrichtung den zeitlichen Verlauf eines Sollwertes der Stellgröße vorgibt und wobei der zeitliche Verlauf des Sollwertes der Stellgröße stetig ist.

12. Verfahren nach Anspruch 11, wobei die Schritte des Verfahrens von Einrichtungen in einem Hybrid-Kraftfahrzeug (1) nach einem der Ansprüche 1 bis 9 ausgeführt werden, und/oder
wobei die Steuereinrichtung **(200)** zu einem Zeitpunkt t₀ eine Veränderung des Fahrzeugverhaltens zum Zeitpunkt t₁ prognostiziert, wobei die Initiierung der Ansteuerung zum Zeitpunkt t_{A} erfolgt, wobei t₀ < t_{A} < t₁ ist,
und/oder
wobei t_{A} so bestimmt wird, dass einerseits die Fahrbarkeit und andererseits die Drehmoment- und/oder Leistungsaufnahme und/oder -abgabe des elektrischen Zusatzverdichters **(150)** des Fahrzeugs **(1)** berücksichtigt wird,
und/oder
wobei der zeitliche Verlauf des Sollwertes der Stellgröße so bestimmt wird, dass einerseits die Fahrbarkeit und andererseits die Drehmoment- und/oder Leistungsaufnahme und/oder -abgabe des elektrischen Zusatzverdichters **(150)** des Fahrzeugs **(1)** berücksichtigt wird.

13. Verfahren nach einem der Ansprüche 11 bis 12, wobei der Lastpunkt der Brennkraftmaschine **(110)** angehoben wird, sofern im Prognosehorizont eine Anforderung nach Erhöhung des Drehmoments erwartet wird und sich eine Batterie auf einem niedrigen Ladeniveau, insbesondere auf einem Ladeniveau von 50 % oder weniger der zu diesem Zeitpunkt nutzbaren Kapazität der Batterie befindet,
wobei vorzugsweise:
insbesondere wenigstens im Wesentlichen gleichzeitig mit der Anhebung des Lastpunkts der Brennkraftmaschine **(110),** die Drehzahl eines Abgasturboladers **(140)** des Hybrid-Kraftfahrzeugs **(1)** angehoben wird.

14. Verfahren nach Anspruch 13, wobei zum Zeitpunkt der Drehmomentanforderung wenigstens eine der folgenden Maßnahmen eingeleitet wird:
a. Umschalten mindestens eines Teils des erhöhten Drehmoments des Verbrennungsmotors **(110)** auf den Abtrieb;
b. Ausnutzen der erhöhten Drehzahl des Abgasturboladers **(140)** zur Erhöhung des Gradienten des Ladedrucks;
c. Antreiben des Zusatzladers mit der, insbesondere nach der Aufladung, in der Batterie vorhandenen Energie.

## Claims

1. A hybrid motor vehicle **(1)** comprising:
a drive system which comprises at least a first drive motor, which is constructed as an internal combustion engine **(110);**
an electric auxiliary compressor **(150),** which influences the operating state of the internal combustion engine **(110)** and thereby the driveability of the hybrid motor vehicle **(1)** and which has at least one adjustable actuating variable;
at least a first sensor device **(210),** which is provided in order to detect at least one vehicle-related state parameter and / or at least one surroundings-related state parameter and / or at least one environment-related state parameter and in order to make available a data value representing this state parameter;
at least one actuating device **(220)** which is provided in order to adjust at least one of the adjustable actuating variables of the electric auxiliary compressor **(150);** and
a control device **(200)** which is set up to process the data values of the first sensor device **(210)** and to transmit a signal to the actuating device **(220)** in order to cause the latter to adjust the at least one of the adjustable actuating variable of the electric auxiliary compressor **(150),** in order thereby to influence the operating state of the internal combustion engine **(110)** with regard to changes in one or more vehicle-related parameter or parameters with regard to acceleration, release of the accelerator, braking, jerk oscillations and / or oscillations during gear changes, and the like of the hybrid motor vehicle **(1),**
wherein the control device **(200)** is provided in order to calculate a prediction of the behaviour of the vehicle from said at least one vehicle-related state parameter and / or said at least one surroundings-related state parameter and / or said at least one environment-related state parameter and in order to derive therefrom a control value or a control data set for controlling this at least one actuating device **(220),**
wherein the control device specifies the development of a target value of the actuating variable over time and wherein the development of the target value of the actuating variable over time is continuous.

2. The hybrid motor vehicle according to claim 1, **characterised in that** the drive system is selected from a group consisting of a drive system with a mild hybrid and / or a full hybrid, wherein the mild hybrid or the full hybrid is preferably designed, with regard to the system structure, as a series hybrid, as a parallel hybrid, as a power split hybrid, as a hybrid with mechanical link and / or as a through the road hybrid.

3. The hybrid motor vehicle according to any one of the preceding claims, wherein the control device **(200)** generates the prediction at a time t₀, and a change in the behaviour of the vehicle at the time t₁ is predicted, wherein the initiation of the controlling takes place at the time t_{A}, wherein t₀ ≤ t_{A} < t₁ and wherein t_{A} is preferably determined by the control device **(200)** in such a way that the drivability and / or the input of torque and / or the input of power and / or the output of torque and / or the output of power of the at least one component **(270)** of the hybrid motor vehicle **(1)** is / are taken into account.

4. The hybrid motor vehicle according to any one of the preceding claims, wherein the sensor devices **(210)** are selected from the group consisting of sensor devices of the drive train, driver assistance systems, in particular radar, lidar, ultrasound and / or camera systems, navigation devices, weather sensor devices, driving mode switches and / or driver interfaces, in particular pedals, selection of gears, indicators and / or windscreen wipers.

5. The hybrid motor vehicle according to any one of the preceding claims, wherein the control device **(200)** is provided in order to detect the specific driving requirements of an individual driver of the hybrid motor vehicle **(1),** to create at least one driver profile therefrom and to include, in the prediction, the insights thus obtained.

6. The hybrid motor vehicle according to claim 5, wherein the control device **(200)** is provided in order to improve the reliability of the prediction of the driver profile, preferably continuously, in the form of a self-optimisation.

7. The hybrid motor vehicle according to any one of the preceding claims, wherein the hybrid motor vehicle further comprises an exhaust gas turbocharger **(140).**

8. The hybrid motor vehicle according to any one of the preceding claims, wherein the control device **(200)** is provided in order to raise the load point of the internal combustion engine **(110)** if a demand for an increase in the torque is expected within the prediction horizon and a battery is at a low charging level, in particular at a charging level of 50% or less of the capacity of the battery that is usable at that time.

9. The hybrid motor vehicle according to claim 8 as dependent on claim 7, wherein the control device **(200)** is provided in order to raise the rotational speed of the exhaust gas turbocharger **(140),** in particular at least substantially simultaneously with the raising of the load point of the internal combustion engine **(110).**

10. The hybrid motor vehicle according to any one of the preceding claims 8 or 9, wherein the control device **(200)** is provided in order to initiate at least one of the following actions at the time of the demand for torque:
a. switching at least a portion of the increased torque of the internal combustion engine to the drive output;
b. utilising the increased rotational speed of the turbocharger, in particular the increased rotational speed of the exhaust gas turbocharger, in order to increase the gradient of the charge pressure;
c. driving the auxiliary charger with the energy available in the battery, in particular after charging.

11. A method for the predictive control of a hybrid motor vehicle **(1)** having at least one first drive motor, which is constructed as an internal combustion engine **(110),** and an electric auxiliary compressor **(150),** which influences the operating state of the internal combustion engine **(110)** and thereby the drivability of the hybrid motor vehicle **(1)** and which has at least one adjustable actuating variable, wherein the method comprises the following steps:
(a) detecting and providing at least two vehicle-related and / or surroundings-related state parameters;
(b) receiving and processing the state parameters that have been provided;
(c) determining a state model on the basis of these state parameters;
(d) calculating a prediction of the behaviour of the vehicle on the basis of this state model; and
(e) controlling at least one actuating device **(220)** as a function of the prediction, wherein the actuating device **(220)** is provided in order to adjust the at least one adjustable actuating variable of the electric auxiliary compressor **(150)** in order thereby to influence the operating state of the internal combustion engine **(110)** with regard to changes in one or more vehicle-related parameter or parameters with regard to acceleration, release of the accelerator, braking, jerk oscillations and / or oscillations during gear changes, and the like of the hybrid motor vehicle **(1),**
wherein the controlling is determined in such a way that, on the one hand, the drivability and, on the other hand, the input of torque and / or the input of power and / or the output of torque and / or the output of power of the electric auxiliary compressor **(150)** of the vehicle **(1)** are taken into account,
wherein the control device specifies the development of a target value of the actuating variable over time and wherein the development of the target value of the actuating variable over time is continuous.

12. The method according to claim 11, wherein the steps of the method are carried out by devices in a hybrid motor vehicle **(1)** according to any one of claims 1 to 9,
and / or
wherein the control device **(200)** predicts, at a time t₀, a change in the behaviour of the vehicle at the time t₁, wherein the initiation of the controlling takes place at the time t_{A}, wherein t₀ < t_{A} < t₁,
and / or
wherein t_{A} is determined in such a way that, on the one hand, the drivability and, on the other hand, the input of torque and / or the input of power and / or the output of torque and / or the output of power of the electric auxiliary compressor **(150)** of the vehicle **(1)** are taken into account,
and / or
wherein the development of the target value of the actuating variable over time is determined in such a way that, on the one hand, the drivability and, on the other hand, the input of torque and / or the input of power and / or the output of torque and / or the output of power of the electric auxiliary compressor **(150)** of the vehicle **(1)** are taken into account.

13. The method according to any one of claims 11 to 12, wherein the load point of the internal combustion engine **(110)** is raised if a demand for an increase in the torque is expected within the prediction horizon and a battery is at a low charging level, in particular at a charging level of 50% or less of the capacity of the battery that is usable at that time,
wherein preferably:
the rotational speed of an exhaust gas turbocharger **(140)** of the hybrid motor vehicle **(1)** is raised, in particular at least substantially simultaneously with the raising of the load point of the internal combustion engine **(110).**

14. The method according to claim 13, wherein at least one of the following measures is initiated at the time of the demand for torque:
a. switching at least a portion of the increased torque of the internal combustion engine **(110)** to the drive output;
b. utilising the increased rotational speed of the exhaust gas turbocharger **(140)** in order to increase the gradient of the charge pressure;
c. driving the auxiliary charger with the energy available in the battery, in particular after charging.

## Revendications

1. Véhicule automobile hybride (1) comprenant :
un système d'entraînement, lequel présente au moins un premier moteur d'entraînement qui est conçu en tant que moteur à combustion interne (110) ;
un compresseur auxiliaire électrique (150), lequel influe sur l'état de fonctionnement du moteur à combustion interne (110) et ce faisant sur la maniabilité du véhicule automobile hybride (1), et présente au moins une grandeur de réglage modifiable ;
au moins un premier équipement de capteur (210), lequel est prévu pour détecter au moins un paramètre d'état relatif au véhicule et/ou à l'environnement et/ou à l'entourage et pour fournir une valeur de donnée représentant celui-ci ;
au moins un équipement de réglage (220), lequel est prévu pour modifier au moins l'une des grandeurs de réglage modifiables du compresseur auxiliaire électrique (150) ; et
un équipement de commande (200), lequel est aménagé pour traiter les valeurs de donnée du premier équipement de capteur (210) et transmettre un signal à l'équipement de réglage (220) en vue d'amener celui-ci à modifier ladite au moins une des grandeurs de réglage modifiables du compresseur auxiliaire électrique (150) afin d'influer sur l'état de fonctionnement du moteur à combustion interne (110) en ce qui concerne des modifications d'un ou plusieurs paramètres du véhicule relatif à l'accélération, la décélération, le freinage, les oscillations par à-coups et/ou les oscillations lors du changement de vitesse, et similaire du véhicule automobile hybride (1),
dans lequel l'équipement de commande (200) est prévu pour calculer une prédiction de comportement de véhicule à partir dudit au moins un paramètre d'état relatif au véhicule et/ou à l'environnement et/ou à l'entourage et en déduire une valeur de commande ou un ensemble de données de commande pour le pilotage dudit au moins un équipement de réglage (220),
dans lequel l'équipement de commande prédéfinit l'évolution dans le temps d'une valeur de consigne de la grandeur de réglage et dans lequel l'évolution dans le temps de la valeur de consigne de la grandeur de réglage est continue.

2. Véhicule automobile hybride selon la revendication 1, **caractérisé en ce que** le système d'entraînement est sélectionné dans un groupe composé de : un système d'entraînement avec une hybridation légère et/ou une hybridation complète, dans lequel, en ce qui concerne la structure de système, l'hybridation légère ou complète est conçue de préférence en tant qu'hybridation série, en tant qu'hybridation parallèle, en tant qu'hybridation à dérivation de puissance, en tant qu'hybridation avec transmission de mouvement mécanique et/ou en tant qu'hybridation couplée à la route.

3. Véhicule automobile hybride selon l'une des revendications précédentes, dans lequel l'équipement de commande (200) élabore la prédiction à un instant t₀ et une modification du comportement de véhicule est prédite à l'instant t₁, dans lequel le lancement du pilotage s'effectue à l'instant t_{A}, dans lequel t₀ ≤ t_{A} < t₁ et dans lequel de préférence t_{A} est déterminé par l'équipement de commande (200) de sorte que la maniabilité et/ou l'absorption et/ou le débit de couple et/ou de puissance de la au moins une composante (270) du véhicule automobile hybride (1) soit pris(e) en compte.

4. Véhicule automobile hybride selon l'une des revendications précédentes, dans lequel les équipements de capteur (200) sont sélectionnés dans le groupe composé de : des dispositifs de capteur de la chaîne cinématique, des systèmes d'assistance à la conduite, en particulier des radars, des lidars, des ultrasons et/ou des systèmes de caméra, des équipements de navigation, des équipements de capteur météorologique, des commutateurs de mode de conduite et/ou des interfaces de conduite, en particulier un pédalier, une sélection de vitesse, des clignotants et/ou des essuie-glace.

5. Véhicule automobile hybride selon l'une des revendications précédentes, dans lequel l'équipement de capteur (200) est prévu pour détecter les exigences de conduite spécifiques d'un conducteur individuel du véhicule automobile hybride (1), enregistrer à partir de là au moins un profil de conducteur et intégrer les connaissances ainsi obtenues dans la prédiction.

6. Véhicule automobile hybride selon la revendication 5, dans lequel l'équipement de capteur (200) est prévu pour améliorer la fiabilité de prédiction du profil de conducteur, de préférence en continu, sous la forme d'une auto-optimisation.

7. Véhicule automobile hybride selon l'une des revendications précédentes, dans lequel le véhicule automobile hybride présente en outre un turbocompresseur à gaz d'échappement (140).

8. Véhicule automobile hybride selon l'une des revendications précédentes, dans lequel l'équipement de capteur (200) est prévu pour augmenter le point de charge du moteur à combustion interne (110) dès lors qu'une exigence d'augmentation du couple est attendue dans l'horizon de prédiction et qu'une batterie se trouve à un niveau de charge bas, en particulier à un niveau de charge de 50 % ou moins de la capacité utilisable de la batterie à cet instant.

9. Véhicule automobile hybride selon la revendication 8 en dépendance de la revendication 7, dans lequel l'équipement de commande (200) est prévu pour augmenter la vitesse de rotation du turbocompresseur à gaz d'échappement (140), en particulier au moins essentiellement simultanément à l'augmentation du point de charge du moteur à combustion interne (110).

10. Véhicule automobile hybride selon l'une des revendications précédentes 8 ou 9, dans lequel l'équipement de commande (200) est prévu pour entreprendre à l'instant de l'exigence de couple au moins l'une des actions suivantes :
a. commutation d'au moins une partie du couple augmenté du moteur à combustion interne vers la sortie ;
b. utilisation de la vitesse de rotation augmentée du turbocompresseur, en particulier du turbocompresseur à gaz d'échappement, pour l'augmentation du gradient de la pression de charge ;
c. entraînement de la charge auxiliaire avec l'énergie présente dans la batterie, en particulier après le chargement.

11. Procédé de pilotage prédictif d'un véhicule automobile hybride (1) avec au moins un premier moteur d'entraînement, qui est conçu en tant que moteur à combustion interne (110), et un compresseur auxiliaire électrique (150), lequel influe sur l'état de fonctionnement du moteur à combustion interne (110) et ce faisant sur la maniabilité du véhicule automobile hybride (1), et présente au moins une grandeur de réglage modifiable, avec les étapes de :
(a) détection et fourniture d'au moins deux paramètres d'état relatifs au véhicule et/ou à l'environnement ;
(b) réception et traitement des paramètres d'état fournis ;
(c) établissement d'un modèle d'état sur la base de ces paramètres d'état ;
(d) calcul d'une prédiction du comportement de véhicule sur la base de ce modèle d'état ; et
(e) pilotage d'au moins un équipement de réglage (220) en fonction de la prédiction, dans lequel l'équipement de réglage (220) est prévu pour modifier la au moins une grandeur de réglage modifiable du compresseur auxiliaire électrique (150) afin d'influer ainsi sur l'état de fonctionnement du moteur à combustion interne (110) en ce qui concerne des modifications d'un ou plusieurs paramètres du véhicule relatif à l'accélération, la décélération, le freinage, les oscillations par à-coups et/ou les oscillations lors du changement de vitesse, et similaire du véhicule automobile hybride (1),
dans lequel le pilotage est déterminé de sorte que d'un côté la maniabilité et de l'autre côté l'absorption et/ou le débit de couple et/ou de puissance du compresseur auxiliaire électrique (150) du véhicule (1) soit pris(e) en compte,
dans lequel l'équipement de commande prédéfinit l'évolution dans le temps d'une valeur de consigne de la grandeur de réglage et dans lequel l'évolution dans le temps de la valeur de consigne de la grandeur de réglage est continue.

12. Procédé selon la revendication 11, dans lequel sont exécutées les étapes du procédé d'équipements dans un véhicule automobile hybride (1) selon l'une des revendications 1 à 9,
et/ou
dans lequel l'équipement de commande (200) prédit à un instant t₀ une modification du comportement de véhicule à l'instant t₁, dans lequel le lancement du pilotage s'effectue à l'instant t_{A}, dans lequel t₀ < t_{A} < t₁,
et/ou
dans lequel t_{A} est déterminé de sorte que d'un côté la maniabilité et de l'autre côté l'absorption et/ou le débit de couple et/ou de puissance du compresseur auxiliaire électrique (150) du véhicule (1) soit pris(e) en compte,
et/ou
dans lequel l'évolution dans le temps de la valeur de consigne de la grandeur de réglage est déterminée de sorte que d'un côté la maniabilité et de l'autre côté l'absorption et/ou le débit de couple et/ou de puissance du compresseur auxiliaire électrique (150) du véhicule (1) soit pris(e) en compte.

13. Procédé selon l'une des revendications 11 à 12, dans lequel le point de charge du moteur à combustion interne (110) est augmenté dès lors qu'une exigence d'augmentation du couple est attendue dans l'horizon de prédiction et qu'une batterie se trouve à un niveau de charge bas, en particulier à un niveau de charge de 50 % ou moins de la capacité utilisable de la batterie à cet instant,
dans lequel de préférence :
la vitesse de rotation d'un turbocompresseur à gaz d'échappement (140) du véhicule automobile hybride (1) est augmentée, en particulier au moins essentiellement simultanément à l'augmentation du point de charge du moteur à combustion interne (110).

14. Procédé selon la revendication 13, dans lequel à l'instant de l'exigence de couple au moins l'une des actions suivantes est entreprise :
a. commutation d'au moins une partie du couple augmenté du moteur à combustion interne (110) vers la sortie ;
b. utilisation de la vitesse de rotation augmentée du turbocompresseur à gaz d'échappement (140) pour l'augmentation du gradient de la pression de charge ;
c. entraînement de la charge auxiliaire avec l'énergie présente dans la batterie, en particulier après le chargement.
